# EUROPEAN PATENT SPECIFICATION

(11) **EP 0 269 084 B1**
(45) Date of publication and mention of the grant of the patent: **09.03.1994**
(21) Application number: 87117385.2
(22) Date of filing: 25.11.1987
(51) Int. Cl.: B23B 1/00

(54) **A hollow piece, provided with an inner long, axial stud, particularly for brake pipe fittings and processes and means for making it**
Hohlstück von einem inneren Kern, insbesondere für Kupplungsstücke für Bremsen und Verfahren und Mittel zu dessen Herstellung
Pièce creuse, pourvue d'une barre intérieure axiale, spécialement pour des pièces de raccordement dans des freins et procédés et moyens pour sa fabrication

(30) Priority: 28.11.1986 IT 8366586
(43) Date of publication of application: 01.06.1988
(73) Proprietor: FINNORD S.P.A., I-21016 Luino (Varese) (IT)
(72) Inventor: Carabelli, Ermanno, I-21044 Cavaria Varese (IT)
(74) Representative: Sassi, Romano

(56) References cited:
- DE-A- 1 939 844
- DE-U- 7 316 966
- US-A- 1 752 976
- US-A- 2 177 095
- US-A- 2 412 939
- US-A- 3 548 687
- MACHINERY, vol. 134, no. 3449, 14th February 1979, pages 34-35

## Description

The present invention relates to a process for manufacturing a pipe fitting for braking systems, said pipe fitting being made in a single piece and comprising a body member, having an axial bore, and terminating, at one end, in a shell concentric with and spaced from that bore, said shell being cylindrical internally and adapted to receive an end portion of a pipe, a central stud in said fitting disposed within said shell, thus defining an annular chamber, and entering the pipe end as the latter is inserted into the said shell, said annular chamber being obtained by cutting (see US-A-1 752 976).

The referred hollow pieces, are provided with an inner, long, hollow, stud, which substantially extends from one end to the opposite end . In addition, the hollow pieces are relatively long and the space available, between the outer surface of the stud and the inner surface of the hollow body, is very scarce, whereas the material to be worked is very hard and the result to be provided is a high precision. In order to comply with such requirements, it was conventionally preferred or dictated to make them as a combination of at least two members: one of which, the body member, was made of hard steel and the second one, the stud member 8, with its roots, was made of special brass. This is the case of pipe fittings, particularly for braking systems. The conventional process for making them includes starting from one side, from a bar of so said "high speed" lead alloyed steel, having a diameter substantially corresponding to the diameter of the external finished wall of the final piece. One or more bars of this kind were set on an automatic, mono or plurispindle lathe. From the other hand, they started from one or more bars of brass, which is valuable at least from the point of view of its finishing. In fact, a tolerance of at least h6 is requested therefor, thus it is relatively expensive. Even here, conventionally, working took place on an automatic, mono or plurispindle lathe, of reduced features, in comparison with that of the lathe used to work the main body member.

One or more bars of this material, having a diameter plentifully superior than that of useful section, were turned, leaving untouched the section to be coupled, which thus took advantage by the original high precision thereof. The provision of the two members, was followed by a coupling stage, which required the members to be accurately finished, at least in their sections to be mutually coupled. In other words the coupling of two members was critical, not only for the operation in itself but even for the consequences thereof on the entire production which can only be of very large series. Accordingly, the presence of a critical step in a production chain of very large series is a serious drawback. In fact, the provision of the separate stud member comprised the 40%, of investment, 25 % of material, 10% of working and 5% as machinery stopping, additional stocking and discarded pieces, and at least 18-20% from the point of view of quality: precision, duration, trustworthiness, feature constancy etc.
US-A-1 752 976 and US-A-2 177 095, disclose a flexible conduit and coupling therefor and method of making same. The coupling is in one piece and is made of brass. Conventional couplings were and are made either in more pieces or in soft materials, such as brass or the like. Whereas, the manufacturers in accordance with the invention, thanks to the invention process and its tool, have reached working costs which are equal or even cheaper than that of brass or other materials or of two pieces couplings with the enormous advantage of obtaining couplings which are completely higher in rank.

US-A-3 548 687, US-A-2 177 095, DE-A-1 939 844 describe tools which are for different uses such as carroting, drilling and trepanning.

The present invention provides a hollow piece construction which overcomes all of the above mentioned disadvantages of the previously known plurimember hollow pieces.

The present invention thus provides the known method with the following characterizing features:
- a preliminary hollowing by trepanning a first axial portion of the annular chamber;
- a thorough hollowing by trepanning the entire annular chamber;
- finishing the inner surface of the thus obtained annular chamber in a combined, simultaneous trepanning of the end of said annular chamber and lateral reaming of the inner wall of said shell;
- simultaneously cutting a number of circular grooves (8') on said stud;
- drilling a bore in said stud.

The way chosen by the inventor was difficult to follow but the inventor succeeded in balancing the whole productive process: including: material choice, tool design and grinding thereof, cooling of same, providing the appropriated implements, such as programming and gradualness of process. The result is a process, substantially in line, compacted, to produce at reduced cost by a rate of at least 14%, compacted, light, precise, trustworthy, hollow pieces.

Other objects and advantages of the invention will be readily understood from the details of construction and operation as more fully hereinafter described and claimed, reference being had to the accompanying drawings, wherein like numerals and letters refer to like parts throughout.

Fig. 1 is a reference flow chart showing the numerous steps comprised in a conventional process.

Fig. 2 is a flow chart showing the less numerous steps comprised in a process according to the present invention.

Fig. 3 shows, in axial, longitudinal, cross-section a hollow worked piece, provided with an inner long stud, of the kind which is convenient to produce with the process according to the present invention.

Fig. 4 is a perspective view of a preliminary and radiusing tool, according to the present invention.

Fig. 5 is a perspective view of a work-piece resulting from working with the tool as shown in fig. 4 according to the present invention.

Fig. 6 is a perspective view, of a rough drilling tool, according to the present invention, particularly adapted to undergo an intense cooling.

Fig. 7 is a perspective view of a work-piece which, according to the present invention, was worked by the tool of fig. 4, and by the tool of fig. 6.

Fig. 8 is a perspective view of a finishing tool, according to the present invention, particularly adapted to undergo an intense cooling.

Fig. 9 is a perspective view of a work-piece which, according to the present invention, in addition to by the tool of fig. 4, and by the tool of fig. 6 was worked by the tool of fig. 8.

Fig. 10 is a longitudinal, axial, cross-section taken from a spindle or a mandrel, in the stage in which the work-piece is being centre drilled.

Fig. 10a) is substantially a repetition of fig. 10 but in the stage in which the work-piece stud is being rifled.

Fig. 11 is a cross-section, similar to that of fig. 10 but in the stage in which the work-piece is being finally drilled.

Fig. 12 is a perspective view, showing partially in elevation and partially in cross section, the longest hollowing tool working as well as the liquid flow path for cooling the tool cutting edges and chip expelling. This machining is referred to figures 6 and 7 but it is applied also to the step of figures 8 and 9.

Fig. 13 is a symbolic, schematic view in an irregular scale, wherein, in general, it is shown the supply of coolant and/or ejecting liquid starting from pumping system, shown in a relatively reduced scale, to the tool, shown in a relatively enlarged scale. In contrast with fig.12, the coolant is supplied, in axial direction from the rear end, instead that radially.

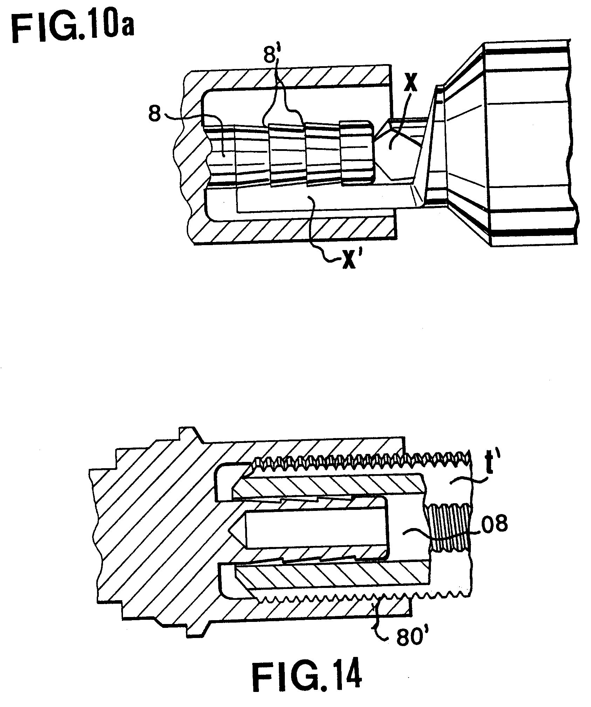

Figure 14 is a longitudinal, axial cross- section, taken from a spindle or a mandrel, in the stage in which the work-piece is being provided with rifles 80' by the tool t' which is in the form of a screw tap, provided with an axial, at least frontal, bore 08'.

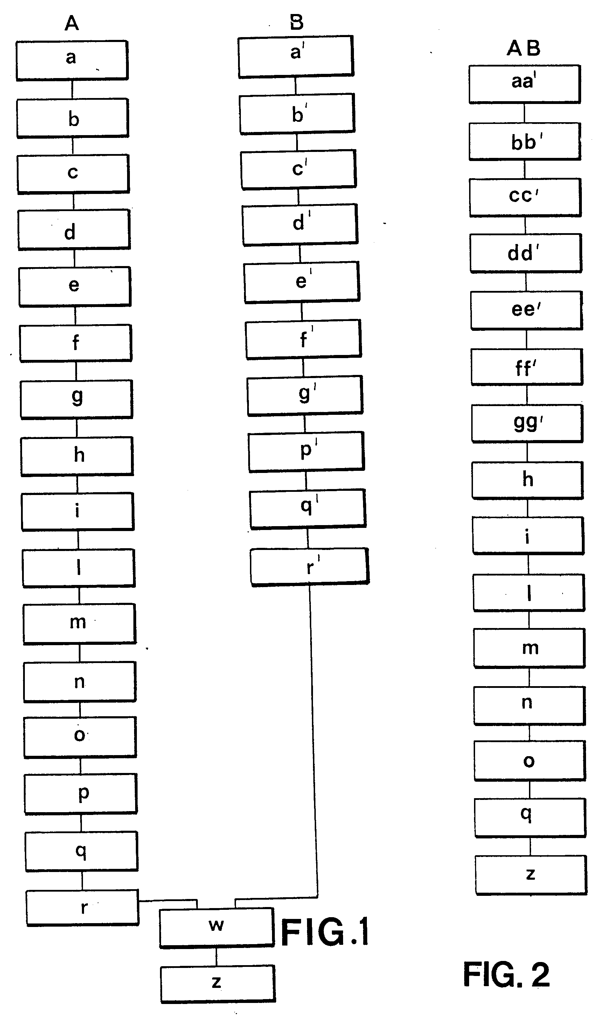

With reference to the figures of the drawings, the hollow pieces, provided with a long inner stud are conventionally produced with a complicate process involving the use of three tool machines, providing a number of steps, which are synthesized by the flow chart of fig. 1.

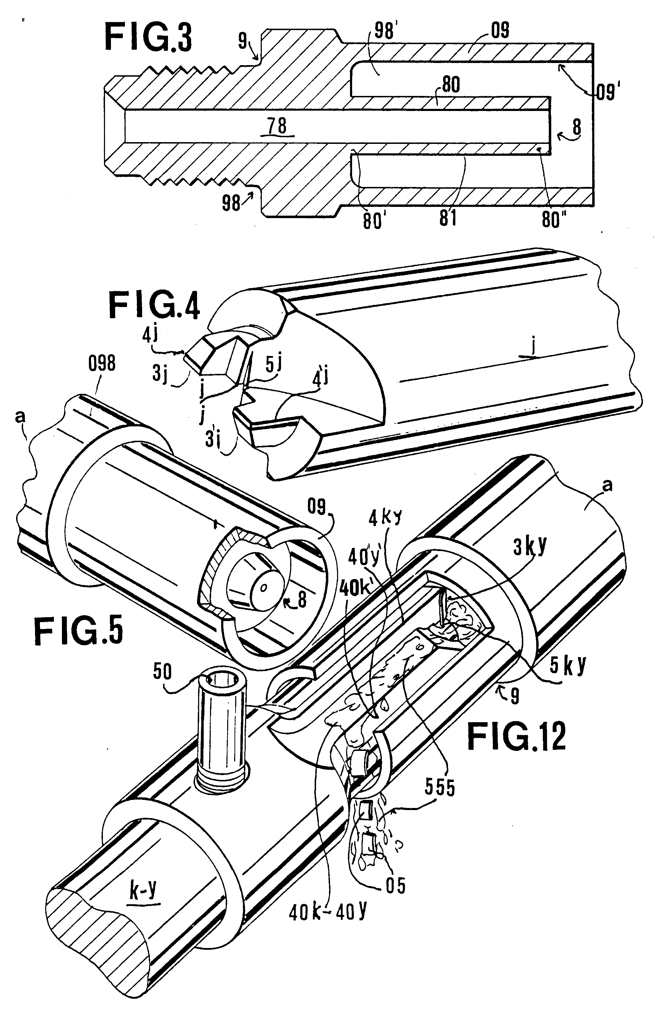

The referred hollow pieces 9, provided with an inner long hollow stud 8, including a bore 78, are also referred as 98 (fig.3) and provided with a stud 80, substantially extending from one end 80' to the opposite end 80''. In addition, the hollow pieces 98 are relatively long and the space 98' available, between the outer surface 81 of the stud 8 and in the inner surface 09' of the hollow body 9, is very scarce; whereas the material to be worked is very hard and the result to be provided are high precision. In order to comply with such requirements it was conventionally preferred or dictated to make them as a combination of at least two members (not shown) one of which, the body member 9, was made of hard steel and the second one, the stud member 8, with its roots (not shown) was made of special brass. This is the case (fig. 3) of pipe fittings particularly for braking systems. The conventional process for making them includes: starting, from one side A, from a bar a) of so said "high speed" lead alloyed steel, having a diameter substantially corresponding to the diameter of the external finished wall 098 of the final piece. One or more bars a) of this kind were set on an automatic, mono or plurispindle lathe b). From the other hand, B, they started from one or more bars a') of brass, which is a valuable material at least from the point of view of its finishing. In fact, a tolerance of at least h6 is requested therefor, thus it is relatively expensive.

Even here, conventionally, working took place on an automatic, mono or plurispindle b'), of reduced features in comparison with that of the lathe b) used for the main body 9. One or more bars a') of this material, having a diameter plentifully superior than that of the useful section, were turned in b', leaving untouched the section (not shown) to be coupled, which thus took advantage by the original high precision thereof.

The provision of two members 8 and 9, was followed by a coupling stage w) which required the members 8 and 9 to be accurately finished, at least in their sections to be mutually coupled (not shown). The preliminary stage of preparation of the body member 9 and of stud member 8 involved: removal c), c') from the lathe b), b') stocking d), d') in a box, its loading in a washing machine e), e'); its removal f), f') from the washing machine when the final drying step g), g') is out; the relative loading on a transfer machine h) of the body member 9 alone, which is to be finished and shaped in compliance with the stud member 8, not shown, to be finally fastened therewith. Thus, while the stud member 8 is kept awaiting for a settlement of the body member 9, the latter is taken from i) by the transfer h) and again cleaned, by another washing machine l) and then removed therefrom m), putting it in a box and moved to an electroplating bath n), wherein it is covered by electrolysis with a layer of protection; therefrom, at o), is removed, and loaded on a table p) for sight checking; to this checking is subjected, in another seat p'), the stud member 8. From these seats, the two members are drawn at q), q'), by loading means r), r') and admitted to the operative section w) of the coupling machine and a final checking z) was made.

According to the present invention the hollow piece 98, comprises a single member, thus the two parallel lines A and B are no longer necessary and a single line AB, as shown in fig. 2, is provided. It will be appreciated that the common stages, earlier included in both parallel lines are now provided together and any final coupling is no longer necessary. Thus, the fourteen steps a), a'); b), b'); c), c'); d), d'); e), e'); f), f'); g), g'); are reduced to seven: aa'), bb'), cc'), dd'), ee'), ff'), gg'); five steps, viz., p), p'), r), r'), w) are completely eliminated and with them are also eliminated the locking up and the materials involved by such stages.

The number of lathe workings, which conventionally were twelve: six for the body member and six for the stud member, are now reduced to six. Thus, accordingly, there is the possibility to duplicate the effect in the domain of the same station, e.g. providing a double effect tool. Of course, even if such workings are equal in number they are somewhat complicated and time consuming. However said additional time is not such to cancel the important advantages obtained by eliminating the stud turning.

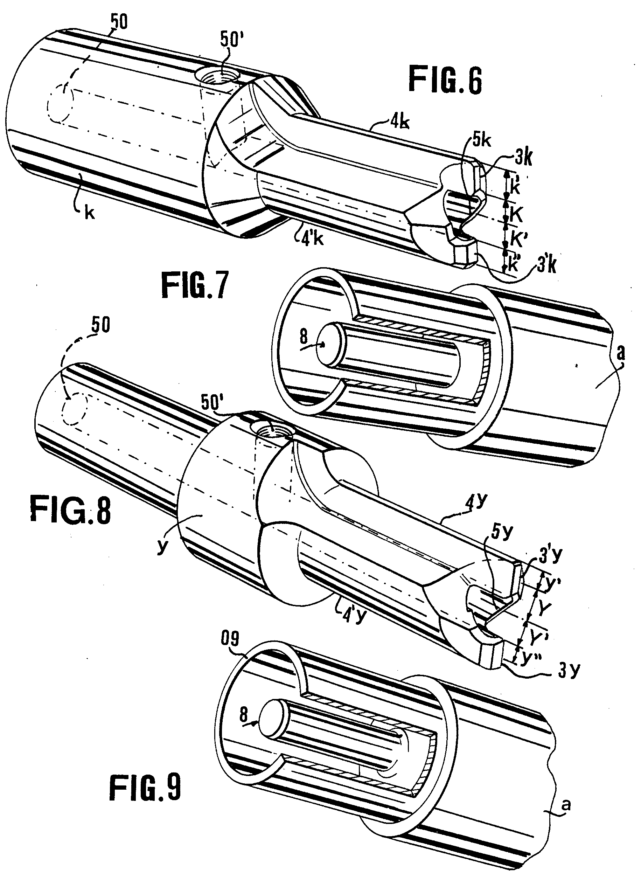

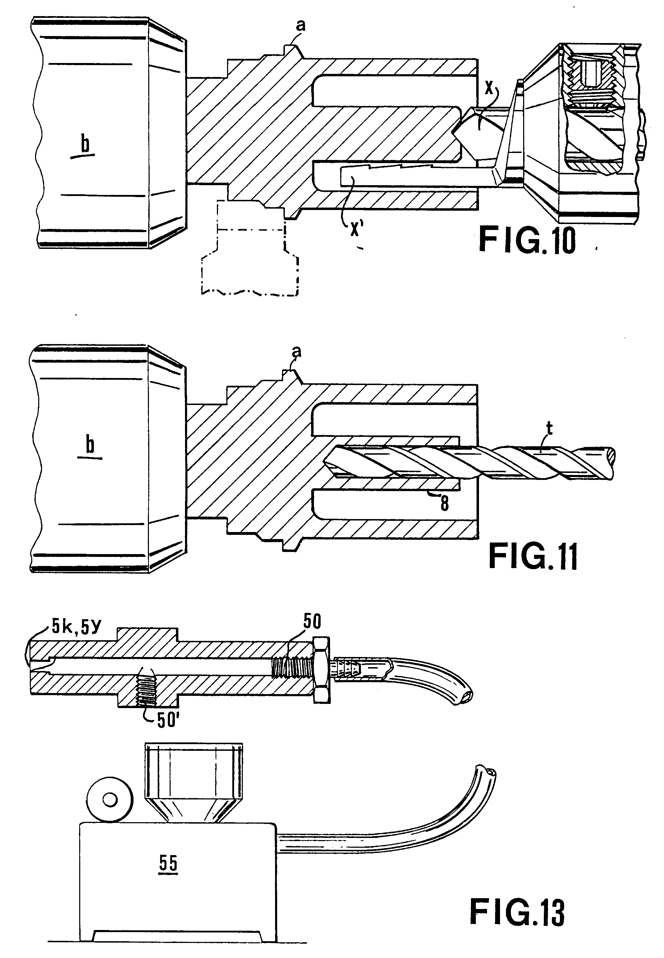

There are now described the lathe workings of the hollow piece, which according to the present invention, is in a single member and obtained from a solid stock. In practice it is advisable to use an automatic lathe with six spindles, not shown, sharing the working into six stations namely: devoting three of them (figure 4,5, 6,7 and 8,9) to hollowing and two of them (figure 10, 10a e 11) to the drilling of the stud. From a bar a), possibly polygonal, in a first station, not shown, wherein a tool of the kind shown in fig. 4 is set, a partial, preliminary, hollowing is provided, to determine the conditions as shown in fig. 5. In a second station, not shown, is set a second tool, of the kind shown in fig. 6. It provides a thorough hollowing which is preliminary to finishing as shown in fig. 7. In a third station, not shown, is set a tool of the kind shown in fig. 8, with which the hollowing is completed in a finishing attitude, determining the conditions as shown in fig. 9. In a fourth station, not shown, is set a double acting tool, of the kind shown in fig. 10; with a first section x thereof a centring, preliminary to the boring, is provided, to determinate the conditions as shown in fig. 10 and with a second section x' an outer rifling 8' of the bored stood 8 is provided. In a fifth station, not shown, a second tool is set, of the kind shown in fig.11, while drilling, determining the conditions shown in same fig. 11. Referring now to the tools, it will be appreciated that those shown in figures 4, 6 e 8, i.e., those providing the hollowing, are rather similar. For sake of brevity, the common parts thereof will be referred to substantially with the same markers, with a dependence j, k, y, the hollowing tools shown in figures 4, 6, and 8, respectively, and desinences x, t, for the tools of figures 10, 10a e 11. The hollowing tools j, k, y (figures 4, 6 e 8, respectively) are provided with a pair of forward cutting edges 3j, 3'j; 3k, 3'k; 3y, 3'y. At least for the first four thereof there is no symmetry between cutting edges of the same pair. This arrangement aims to distribute or balancing the working load and to simplify the chip ejection. In fact, the useful lengths thereof, are arranged at different distances J,J'; K,K'; Y,Y' from the axis, and they have a length j',j''; k',k''; y',y'', different too. The tools j,k,y, have a pair of radial, longitudinal, symmetrical cutting edge 4j, 4'j; 4k, 4'k; 4y, 4'y; and frontingly, at the centre, a cavity 5j, 5k, 5y. The cavities 5k, 5y, provide in addition, an outlet for the coolant and/or expeller 555, which get in from one inlet opening 50, 50' and is connected to a pumping device 55, compressing it. Thus, the coolant 555, advances, reaching the cutting edges and then turns in an opposite direction, carrying therewith the chips 05 flowing through the discharge channels 40k, 40k'; 40y, 40y', each connected with the cutting edge: 4k, 4k'; 4y, 4y', respectively. Upon ending of the hollowing stage, working is prosecuted with the tools x, x', t, t', wherein the tool t is a normal twist drill, while the tool x is a centre drill, the implement x' is a boring tool and the implement t' is a tapping tool provided with an, axial, at least frontal hollowing 08.

The foregoing is considered as illustrative only of the principles of the invention.

## Claims

1. Process for manufacturing a pipe fitting (9) for braking systems, said pipe fitting being made in a single piece and comprising a body member having an axial bore (78), and terminating at one end in a shell (09) concentric with and spaced from that bore (78), said shell (09) being cylindrical internally and adapted to receive an end portion of a pipe, a central stud (8) in said fitting disposed within said shell, thus defining an annular chamber, and entering the pipe end as the latter is inserted into the said shell (09), said annular chamber being obtained by cutting, characterized in that it comprises the following steps:
- a preliminary hollowing by trepanning a first axial portion of the annular chamber;
- a thorough hollowing by trepanning the entire annular chamber;
- finishing the inner surface of the thus obtained annular chamber in a combined, simultaneous trepanning of the end of said annular chamber and lateral reaming of the inner wall of said shell (09);
- simultaneously cutting a number of circular grooves (8') on said stud (8);
- drilling a bore (78) in said stud (8).

2. Process, as claimed in claim 1, wherein hollowing is provided with at least a tool (j, k, y) having at least a frontal cutting edge (3j, 3'j; 3k, 3'k; 3y, 3'y;) and at least a longitudinal cutting edge (4j, 4'j; 4k, 4'k; 4y, 4'y;) assisted by a cooling system (55), characterized in that the projection on the radius of the frontal cutting edge is inferior to the radius of the outer circumference of the hollowing (98') provided by the tool and that the radius section not involved by the projection of the cutting edge of the tools determines a circular cross-section used for supplying in axial direction coolant and/or chip ejecting fluid (555) under pressure, ejection which is accomplished by leaving a hollow cross section inside said hollow annular space (98'), which has as generatrix the projection of the frontal cutting edges (3j, 3'j; 3k, 3'k; 3y, 3'y;) and/or as limitation the free space left by the cross section of the longitudinal cutting edges (4j, 4'j; 4k, 4'k; 4y, 4'y) and flute body thereof.

3. Process, as claimed in claim 2, characterized in that both the frontal blades (3j, 3'j) and the longitudinal blades (4j, 4'j) of the tool (j) are at least two, for providing an annular hollow space (98') and whereby the cross section delimitated by the inner circumference and utilized to supply the coolant and/or ejecting medium (555) is equal or smaller than the discharge cross section (40k, 40k'; 40y, 40y') of the longitudinal cutting edges (4j, 4'j; 4k, 4'k; 4y, 4'y), whereby to provide a way back for the coolant (555) and chips (05).

4. Process, as claimed in any of the preceding claims, characterized in that the hollowing, the rifling and the boring are provided on an automatic lathe with six spindles, wherein the hollowing involves three stations and three tools (j, k, y) and the boring one and a half station and one tool (t) plus one section of another tool (x), one station being devoted to provide an inner rifling (80') by a hollow tool (t') having the cutting edges in the form of a screw tap (fig. 14), as well as to the cutting to separate the finished work-piece.

## Patentansprüche

1. Verfahren zur Herstellung eines Rohrkupplungsstückes (9) für Bremssysteme, welches Rohrkupplungsstück aus einem einzigen Stück gefertigt ist und einen Körperteil mit einer axialen Bohrung (78) aufweist und an einem Ende in einer konzentrisch zu dieser Bohrung und im Abstand zu dieser verlaufenden Hülse (09) endet, welche Hülse (09) innen zylindrisch ausgebildet und zur Aufnahme des Endteiles eines Rohres befähigt ist, wobei in dieser Kupplung in der Hülse ein zentraler Kern (8) angeordnet ist und auf diese Weise eine Ringkammer definiert und in das Rohrende, wenn letzteres in die Hülse (09) eingeschoben wird, eintritt, welche Ringkammer durch Schneiden erhalten wurde, dadurch gekennzeichnet, daß es die folgenden Stufen umfaßt:
- eine vorhergehende Austiefung durch Hohlbohren eines ersten axialen Abschnittes der Ringkammer;
- eine vollständige Austiefung durch Hohlbohren der ganzen Ringkammer;
- Nachbearbeitung der Innenfläche der so erhaltenen Ringkammer in Zuge einer kombinierten gleichzeitigen Hohlbohrung des Endes der Ringkammer und seitliches Ausräumen der Innenwand der Hülse (09);
- gleichzeitiges Schneiden einer Anzahl von kreisrunden Einkerbungen (8) auf dem Kern (8);
- Bohren eines Loches (78) im Kern (8).

2. Verfahren nach Anspruch 1, wobei die Austiefung mit wenigstens einem Werkzeug (j, k, y), welches wenigstens eine stirnseitige Schneidkante (3j, 3'j; 3k, 3'k; 3y, 3'y) und wenigstens eine Radial-längschneidkante (4j, 4'j; 4k, 4'k; 4y, 4'y) besitzt, unterstützt durch ein Kühlsystem (55), erfolgt, dadurch gekennzeichnet, daß der Vorsprung auf dem Radius der stirnseitigen Schneidkante geringer ist als der Radius des Außenumfanges der durch das Werkzeug geschaffenen Austiefung (98') und daß der Radiusabschnitt, der nicht durch den Vorsprung der Schneidkante der Werkzeuge umfaßt wird, einen kreisrunden Querschnitt festlegt, der verwendet wird, um wesentlich in axialer Richtung ein Kühlmittel und/oder eine Spanabfuhrflüssigkeit (555) unter Druck zuzuführen, wobei die Spanabfuhr durch Freilassen eines hohlen Längsquerschnitts im Inneren des ringförmigen Hohlraumes (98') erfolgt, der als Erzeugende den Vorsprung der stirnseitigen Schneidkanten (3j, 3'j; 3k, 3'k; 3y, 3'y) und/oder als Begrenzung den freien Raum, der durch den Querschnitt des Längsschneidkanten (4j, 4'j; 4k, 4'k; 4y, 4'y) und dem Riffelkörper hiervon freigelassen wird, besitzt.

3. Verfahren nach Anspruch 2, dadurch gekennzeichnet, daß sowohl die stirnseitigen Messer (3j, 3'j) als auch die Längsmesser (4j, 4'j) des Werkzeuges (j) wenigstens zwei sind, um einen ringförmigen Hohlraum (98') zu bilden, und wobei der Querschnitt, der durch den Innenumfang begrenzt und zur Zufuhr des Kühlmittels und/oder Spanabfuhrmittels (555) verwendet wird, gleich oder kleiner ist als der Ausräumquerschnitt (40k, 40k'; 40y, 40y') der Längsschneidkanten (4j, 4'j; 4k, 4'k; 4y, 4'y), um einen Rückweg für das Kühlmittel (555) und die Späne (05) zu schaffen.

4. Verfahren nach einem der vorhergehenden Ansprüche, dadurch gekennzeichnet, daß die Austiefung, die Riffelung und das Bohren auf einer automatischen Drehbank mit sechs Spindeln durchgeführt werden, wobei die Austiefung drei Stufen und drei Werkzeuge (j, k, y) und das Bohren eineinhalb Stufen und ein Werkzeug (t) plus einen Abschnitt eines anderen Werkzeuges (x) umfassen, wobei eine Station für eine innere Riffelung (80') durch ein hohles Werkzeug (t'), welches Schneidkanten in Form eines Gewindebohrers (Fig. 14) besitzt, sowie zum Abschneiden zwecks Abtrennung des fertigen Werkstückes vorgesehen ist.

## Revendications

1. Procédé de fabrication d'une pièce de raccordement (9) pour systèmes de freinage, ladite pièce de raccordement étant faite en une seule pièce et comprenant un membre de corps avec un alésage axial (78) et terminant à une extrémité en une douille (09) concentrique avec et éloignée du dit alésage (78), ladite douille (09) étant intérieurement cylindrique et adaptée à recevoir une portion terminale d'un tube, une barre centrale (8) dans ce raccordement disposé dans la douille, définant ainsi une chambre annulaire et pénétrant dans l'extrémité du tube lorsque le dernier est inséré dans ladite douille (09), ladite chambre annulaire étant obténue par taillage, caractérisé en ce qu'il comprend les étages suivants:
- un creusement préliminaire par perçage creux d'une première portion axiale de la chambre annulaire;
- un creusement complet par perçage creux de la chambre annulaire entière;
- finissage de la surface intérieure de la chambre annulaire ainsi obtenue par perçage creux combiné, simultané de l'extrémité de ladite chambre annulaire et débarrassement latéral de la paroi intérieure de ladite douille (09);
- taillage simultané d'un nombre de cannelages circulaires (8') sur cette barre (8);
- perçage d'un trou (78) dans la barre (8).

2. Procédé selon la revendication 1, dans lequel le creusement est produit avec au moins un outil (j, k, y), présentant au moins un côté taillant frontal (3j, 3'j; 3k, 3'k; 3y, 3'y) et au moins un côté taillant radiant-longitudinal (4j, 4'j; 4k, 4'k; 4y, 4'y) à l'aide d'un système de refroidissement (55), caractérisé en ce que la projection sur le rayon du côté taillant frontal est inférieure au rayon de la circonférence extérieure du creusement (98') produit par l'outil et en ce que la portion du rayon pas embrassée par la projection du côté taillant de l'outil détermine une coupe transversale circulaire utilisée pour introduire en direction axiale, sous pression, un fluide de refroidissement et/ou d'écartement de rognures (555), l'écartement étant obtenu en laissant libre une coupe transversale creuse dans l'intérieure de cet espace creux annulaire (98'), présentant comme génératrice la projection du côté taillant frontal (3j, 3'j; 3k, 3'k; 3y, 3'y) et/ou comme limitation l'espace laissé libre par la coupe transversale des côtés taillants longitudinaux (4j, 4'j; 4k, 4'k; 4y, 4'y) et le corps cannelé duquel.

3. Procédé selon la revendication 2, caractérisé en ce que aussi bien les lames frontales (3j, 3'j) que les lames longitudinaux (4j, 4'j) de l'outil (j) sont au moins deux pour former un espace annulaire creux (98') et en ce que la coupe transversale limitée par la circonférence intérieure et utilisée pour l'adduction du moyen de refroidissement et/ou d'écartement (555) est égale à ou plus petite que la coupe transversale de l'écartement (40k, 40k'; 40y, 40y') des côtés taillants longitudinaux (4j, 4'j; 4k, 4'k; 4y, 4'y), pour créer une route de retour pour le moyen de refroidissement (555) et les rognures (05).

4. Procédé selon une des revendications précédantes, caractérisé en ce que le creusement, le cannelage et le perçage sont effectués sur un tour automatique à six broches, le creusement comprenant trois étages et trois outils (j, k, y) et le perçage un étage et demi et un outil (t) plus une section d'un autre outil (x), un étage étant prévu pour le cannelage intérieur (80') au moyen d'un outil creux (t'), présentant les côtés taillants sous forme d'un taraud (Fig. 14), ainsi que pour le taillage pour séparer la pièce fabriquée finie.
